# EUROPEAN PATENT APPLICATION

(11) **EP 4 737 206 A1**
(43) Date of publication of application: **06.05.2026**
(21) Application number: 25212742.8
(22) Date of filing: 31.10.2025
(51) Int. Cl.: B60N 2/24, B60N 3/00, B60P 3/38

(54) **TRUCK WITH A CABIN BED**

(30) Priority: 01.11.2024 NL 2038987
(71) Applicant: DAF Trucks N.V., 5643 TW Eindhoven (NL)
(72) Inventor: ROESTENBURG, Adam, 5643 TW Eindhoven (NL); PURDY, Stuart William, 5643 TW Eindhoven (NL)
(74) Representative: V.O.

(57) **Abstract**

A truck is disclosed, comprising a cabin that includes a resting arrangement behind the driver seat for resting the driver inside the cabin. The resting arrangement comprises a pivotable rest member that provides a support surface for supporting the driver. In a first state the rest member is in a lowered position, tilted inwards against the rear wall of the cabin below the rear view window. In a second state, the rest member is in a raised position and the support surface is tilted upwards in a substantially level orientation perpendicular to the rear wall. A sliding guide slidably guides the rest member between the first state and the second state, and vertically supports the rest member in the second state.

## Description

The invention relates to a truck, comprising a cabin including a driver seat for seating a driver of the truck, wherein a rear wall of the cabin comprises a rear view window through which the driver is able to look towards a rear of the truck, wherein a resting arrangement is provided behind the driver seat for resting the driver inside the cabin.

### BACKGROUND

Truck drivers sometimes need to rest when traveling long distances, or between shorter trips. For comfort and privacy, drivers preferably take their rest inside the cabin. In some trucks, the cabin is designed with a specialized compartment, or sleeper bunk, for the driver to rest during long hauls. These trucks are sometimes referred to as "sleeper trucks". Other trucks that are designed to provide short-haul deliveries are provided with a so called "day cab" which does not have such a specialized compartment.

Due to the limited space that is available, it is a challenge to fit a bed inside a day cab, without being a hindrance to the driver when the bed is not used. To address this issue, some day cabs are equipped with a foldable bed. These beds typically fold up against the rear wall of the cabin when not in use. However, the presence of a folded up bed behind the driver seat limits the maximum rearward travel and position of the driver seat, which may result in an ergonomically suboptimal driving position for the driver. Also, it may not be preferred to install a foldable bed in a cabin with a rear view window in case the bed obstructs the driver's view through the rear view window when the bed is folded up.

Conversely, when the driver wants to rest, it should be possible to take the bed out from its stowed position to provide a stable and comfortable resting surface, preferably without the driver having to move the seats around. To achieve this, known foldable beds propose a relatively complex mechanism that can be cumbersome to operate.

Hence, considering the limited space inside the cabin and that the bed is to be compactly stowed yet stable and comfortable when in use, it remains a challenge to provide a foldable bed that is designed for quick and easy setup, allowing it to be folded out without the need to adjust the seats, ensuring convenience and efficiency.

### SUMMARY

The present invention provides a truck, comprising a cabin including a driver seat for seating a driver of the truck. A rear wall of the cabin comprises a rear view window through which the driver is able to look towards a rear of the truck.

A resting arrangement is provided behind the driver seat for resting the driver inside the cabin. The resting arrangement comprises a pivotable rest member that provides a support surface for supporting the driver. The rest member is pivotable in that a rear edge of the rest member is pivotably suspended about a pivot axis by a carriage that is vertically translatable with respect to a vertical guide attached to the rear wall of the cabin. The pivotable rest member is operable between a first state and a second state.

In the first state the rear edge is in a lowered position and the support surface is tilted inwards against the rear wall of the cabin, and a front edge of the rest member opposite the rear edge is below the rear view window.

In the second state, the rear edge is in a raised position and the support surface is tilted upwards in a substantially level orientation perpendicular to the rear wall. In other words, from the first state, the rest member is tilted outwards away from the rear wall until the support surface faces upward in the second state.

The resting arrangement further comprises a sliding guide arranged for slidably guiding a bottom surface of the rest member opposite the support surface over a guided path between the first state and the second state. The sliding guide is arranged for vertically supporting the rest member in the second state.

The rest member as defined in the present invention can refer to a bed, a stool, or a seat, or any other means that is primarily designed for supporting a driver (or any other person) in a resting position, so that the driver can sit down or sleep on the rest member, e.g. to re-energize inside the cabin.

As mentioned above, the rest member is not only pivotable but also translatable over the vertical guide rail for moving the rest member from the first state to the second state, or vice versa. As a result, the rest member can be stowed in a relatively low position behind the driver seat, e.g. in a position where the rear edge lies against the cabin floor or engine tunnel. Due to the low position of the rest member, the rear view window remains unobstructed when the rest member is stowed. The low storage position of the rest member also makes the cabin look more spacious, and prevents that the rest member interferes with the adjustability of the driver seat since a large part of the rest member is stored behind and below the driver seat. Hence, the forward and rearward adjustability of the seat, as well as the inclination of the backrest can be fully maintained.

Conversely, when the rest member is to be used for resting, the driver can pull up and pivot the rest member outward to the substantially level position. The sliding guide assists the user during a movement of the rest member from the first state to the second state, or reverse, by leading the bottom surface over an optimal, predefined guided path. For example, the sliding guide can provide one or more slide surfaces arranged for abutting the bottom surface of the rest member. The shape of the one or more slide surfaces determines the guided path.

Alternatively, or additionally, the bottom surface of the rest member may be shaped to define the guided path. For example, the bottom surface may be locally curved, e.g. hollow or convex, where the bottom surface contacts the sliding guide. The sliding guide does not necessarily only involve parts that slide over each other, but may also include rolling elements, e.g. to reduce friction. For example, the bottom surface of the rest member and/or the sliding guide may comprise one or more rollers arranged for rolling over a mating surface of the sliding guide, or the rest member, respectively. Alternatively, or additionally, the sliding guide and/or the bottom surface of the rest member may be coated with a low friction coating, or a strip of a low friction material may be provided between the sliding guide and the bottom surface.

Since the sliding guide supports the rest member in the second state, a stable platform is provided that can support the weight of the driver.

The sliding guide is preferably arranged for guiding the rest member over the guided path between the first and second state, and also for constraining movement of the rest member in other directions that deviate from the guided path. Preferably, the connection remains intact as the rest member is moved over the guided path.

For example, the sliding guide may be slidably and/or rollably connected to the bottom surface of the rest member. In other words, the slidable or rollable connection prevents the sliding guide and rest member from separating or misaligning during the movement with respect to each other, by staying physically connected. Such a connection can for example comprise interlocking features, such as grooves, rails, rollers or channels, that guide the movement over the guided path while preventing disconnection.

In some embodiments, the sliding guide comprises one or more upstanding support struts that extend from a floor of the cabin. In case of multiple support struts, each support strut can provide a slide surface that defines a guided path for guiding a section of the bottom surface of the rest member.

Preferably, the sliding guide comprises a pair of upstanding support struts, or more than two upstanding support struts, to distribute the contact force between the sliding guide and the rest member over the bottom surface. In this way, bending stresses in the rest member due to the weight of the driver resting on top of the rest member can be reduced. And as a result, the rest member can be designed relatively thin, which makes the resting assembly even more compact. For example, two upstanding support struts may be provided in a central section of the cabin, between the driver seat and the front passenger seat, e.g. alongside the center console or engine tunnel. These support struts can thus support a middle part of the rest member in the second state, so that the center of gravity of a person resting, e.g. sitting or lying down, on the rest member is directly above and between the support struts. To provide extra strength and stability, one or more further support struts may be provided, e.g. at or near the side wall of the cabin. Optionally, the one or more further support struts can be mounted to, or integrated in the side wall of the cabin.

The support struts do not need to be identical to each other, since the shape of the bottom surface may vary over the length or width of the rest member. Also, depending on the position of the support strut with respect to the rest member, the guided path may locally vary and the slide surface of each support strut can be adapted accordingly.

In some embodiments, the guided path follows a curved trajectory that extends upwards and is curved forward in a driving direction of the truck. For example, the curved trajectory may follow a partially circular or ellipsoid contour, e.g. of a support strut.

The rest member can for example a support surface for supporting the driver, or any other person, in a sitting or lying down position. Preferably, the rest member extends between and up to opposing lateral side walls of the cabin in the second state, so that the driver can sleep or rest while lying down. The width of the cabin can be up to about 2,5 meters, which means that in the lateral direction, the rest member may be long enough to support the full length of the driver.

In the first state, the rest member preferably extends in a vertical direction from a floor of the cabin up to a lower edge of the rear view window. For example, the rear edge of the rest member may lie against the engine tunnel in the first state, or may even be suspended a bit higher. In the first state, the front edge may extend up to about the height of the lower edge of the rear view window, or a bit beyond, e.g. no more than 100 millimeter beyond the lower edge, so that the rear view window is substantially clear from obstruction and usable by the driver. In general, a width of the rest member between the front and rear edge may be about 40-80 centimeters, preferably 60-80 centimeters, to provide a comfortable support surface for the driver to lie down on. Said width is not necessarily the same over the length of the rest member. For example, the rest member may be wider at a middle section and narrower at the end sections toward the lateral side walls of the cabin.

In the second state, i.e. when the rest member is held in a substantially level orientation, the rest member preferably extends from the rear wall of the cabin and at least partially across the driver seat in a driving direction of the truck. To accommodate for the partial extension across the driver seat, the rest member can have a recessed section directly behind the driver seat, in which recessed section the front edge of the rest member is recessed towards the rear edge. In other words, the width of the rest member is reduced in the end section directly behind the driver seat. This narrowed section does not significantly reduce the comfort of the driver when lying down on the rest member, since this section would typically support the head or feet of the driver.

Alternatively, or additionally, the bottom surface of the rest member can have a chamfered section directly behind the driver seat, in which chamfered section the rest member tapers from a largest thickness at the rear edge towards a smallest thickness at the front edge. In the second state, the chamfered section may abut the backrest of the driver seat for additional support.

To facilitate movement of the rest member between the first and second state, the front edge of the rest member may comprise a handle for manually operating the rest member.

Optionally, the resting arrangement comprises weight compensation means for at least partially compensating a weight of the rest member. For example, counterweights may be coupled to the carriage to facilitate the vertical translation of the carriage including the rest member with respect to the vertical guide. Alternatively, or additionally, the vertical translation may be assisted by means of an actuator, or a spring element like an air spring. To facilitate the downward movement of the rest member towards the first state, i.e. the stowed position, the weight compensation means may comprise one or more dampers. In this way, it can be prevented that the rest member is dropped down too quickly, to avoid damage to the floor and/or the rest member.

In some embodiments, the resting arrangement comprises a biasing means for biasing the rest member towards the first and/or second state. One or more biasing elements can e.g. be operably connected to the vertical guide and/or the carriage to preload the rest member to the first or second state, or to both the first and second state. Alternatively, one or more biasing elements may be mounted between the sliding guide and the rest member. The guided path may define a dead point somewhere between the first state and the second state that changes the direction of the preload force exerted by the one or more biasing elements, to bistably bias the rest member towards the first and second state. The one or more biasing elements can for example include coil springs, leaf springs, torsion springs, air springs, and other resilient components that as such are known in the art.

In other or further embodiments, the resting arrangement comprises a lock mechanism arranged for locking the rest member in the first and/or second state. For example, a snap-lock connection or latch mechanism may be present between the vertical guide and the carriage, or between the sliding guide and the rest member. In this way it can be prevented that the rest member inadvertently moves out from the first state, for example when the truck is driving over a rough or bumpy road surface.

In preferred embodiments which provide a reliable, easy to use, yet simple solution for the resting arrangement, the carriage comprises an L-shaped bracket, wherein the L-shaped bracket includes a leg that extends from the vertical guide towards a foot that extends out from the leg and supports the bottom surface of the rest member, wherein, in the first state, the leg extends substantially perpendicular to the rear wall of the cabin and the foot extends vertically upward, and wherein, in the second state, the leg abuts the vertical guide and the foot extends substantially perpendicular to the rear wall. Optionally, the L-shaped bracket comprises a lock hook that is arranged for hooking onto a cutout in the vertical guide when the rest member is in the second state, for thereby constraining a vertical translation of the carriage relative to the vertical guide as well as constraining a tilting of the rest member about the pivot axis.

### BRIEF DESCRIPTION OF THE DRAWINGS

The invention will be further elucidated in the figures:
FIG. 1 illustrates an embodiment of a truck with a resting arrangement in a stowed, first state;
FIG. 2 illustrates the resting arrangement of FIG. 1 in an expanded, second state;
FIG. 3 illustrates a section view of an embodiment of the resting arrangement in the second state;
FIG. 4 illustrates a section view of the resting arrangement of FIG. 3 in a position between the second state and the first state;
FIG. 5 illustrates a section view of the resting arrangement of FIG. 3 in the first state;
FIGs. 6A and B provide detailed views of an embodiment of a sliding guide of the resting arrangement;
FIGs. 7A and B provide a side view of an embodiment of the resting arrangement in the first and second state;
FIGs. 8A and B illustrate another or further embodiment of the resting arrangement, comprising a carriage in the form of an L-shaped bracket.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

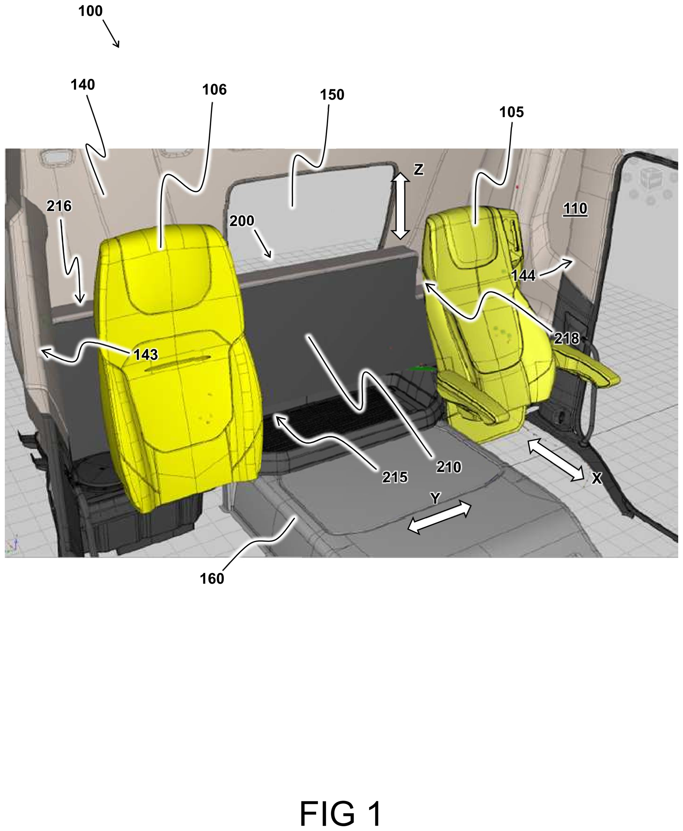

FIG. 1 illustrates an embodiment of a truck 100, in particular a truck that is designed to provide short-haul deliveries, e.g. for local or regional deliveries, usually within a radius of 300-500 kilometers. The truck 100 is provided with a cabin 110, e.g. a so called "day cab". Compared to sleepers and other trucks, day cab trucks usually do not have a sleeping cabin to save space. The chassis is typically shorter to move through traffic more easily and reach destinations faster. The lighter chassis and frame also make a day cab truck more fuel-efficient than other, larger trucks. The capability to haul more or less cargo depends on the axles. Conveniently, for visibility the truck 100 is provided with a rear view window 150 in the rear wall 140 of the cabin that allows the driver to look towards the rear of the truck.

A disadvantage of known day cab trucks is that they normally lack a dedicated sleeping room, so that the driver is generally limited to shorter trips. While it is possible to find ways to sleep in a day cab, less space means it will be less comfortable for operators to do so.

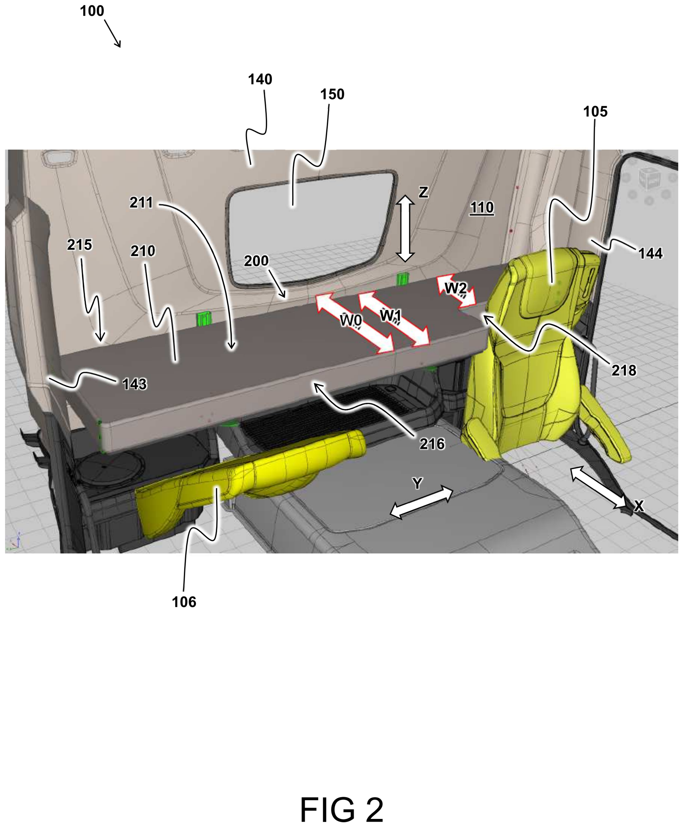

To address this issue, the truck 100 of the present invention is provided with a resting arrangement 200 behind the driver seat 105 of the truck. The resting arrangement 200 allows the driver to rest, e.g. relax or sleep, inside the cabin 110. The resting arrangement 200 comprises a pivotable rest member 210 that provides a support surface 211 for supporting the weight of the driver (see FIG. 2). The rest member 210 can e.g. provide a seat or a bed, or any other type of member suitable and intended for supporting all or most of the body weight of an adult person, e.g. a weight of at least 70 kilograms, preferably at least 100-150 kilograms, or more.

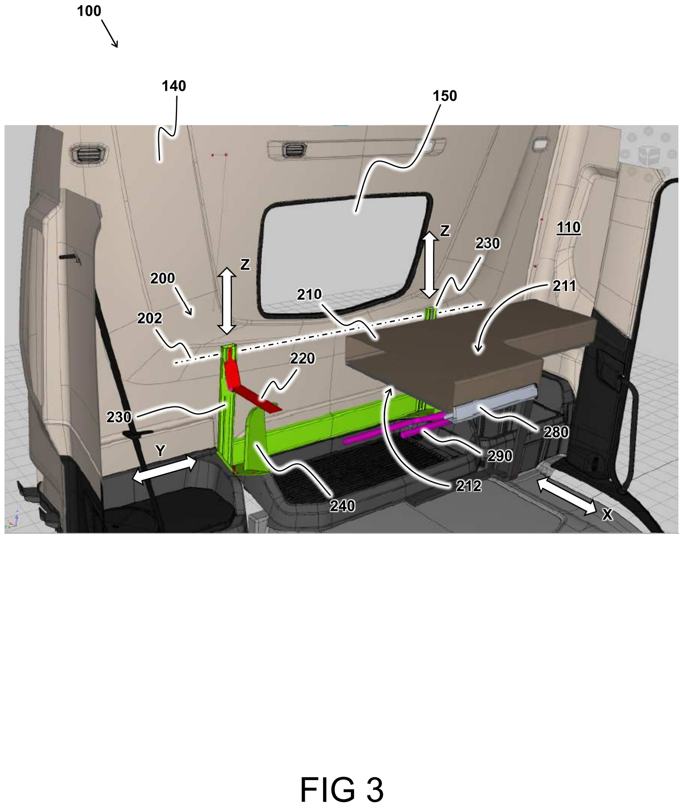

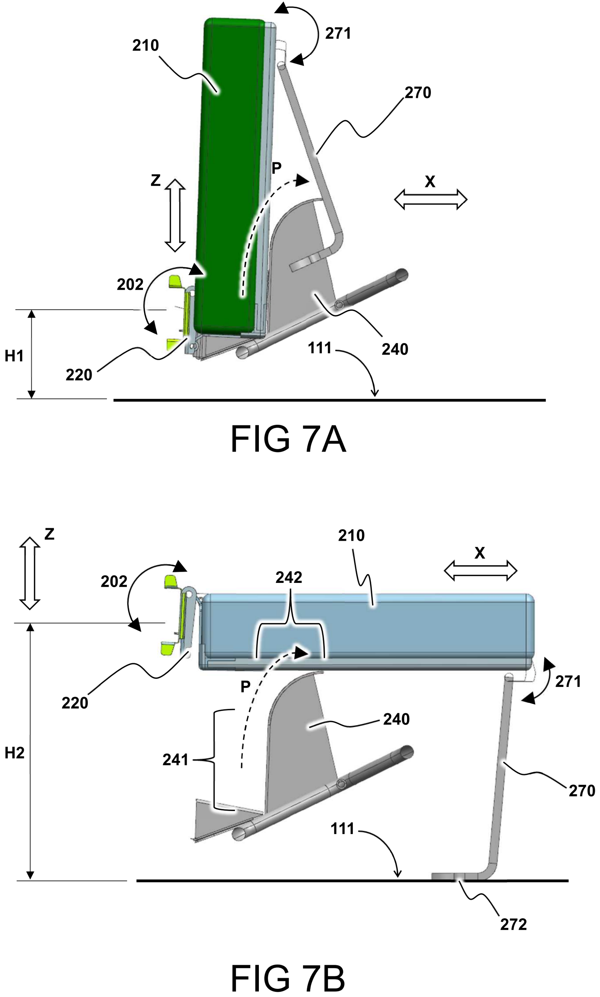

The rest member 210 is pivotable in that a rear edge 215 of the rest member is pivotably suspended about a pivot axis 202 by a carriage 220 (e.g. shown in FIGs. 3 and 7). The carriage 220 e.g. comprises a hinged bracket. The carriage 220 is vertically translatable with respect to a vertical guide 230 attached to the rear wall of the cabin. The vertical guide 230 e.g. comprises a rail or slot that vertically guides the carriage 220 in an upward or downward direction Z. In preferred embodiments the rest arrangement 200 comprises at least two vertical guides 230 with corresponding carriages 220 that are spaced apart in the lateral direction of the truck, to improve the stability of the rest member 210.

The pivotable rest member 210 is operable between a first state and a second state. FIG. 1 illustrates the rest member 210 in the first state. As illustrated, the rest member 210 is stowed in the space between the cabin rear wall 140 and the driver seat 105. A passenger seat 106 is not necessarily present in the truck 100, but in case it is, the rest member 210 may also extend into the space behind the passenger seat 106. In the first state the rear edge 215 is in a lowered position, e.g. at a bottom position of the vertical guide 230. The support surface 211 is tilted inwards against the rear wall 140 of the cabin. The front edge 216 of the rest member opposite the rear edge is preferably below the rear view window 150, or may extend no more than 100 millimeter beyond the lower edge of the rear window 150, so that the rear window 150 is substantially unobstructed by the rest member 210.

FIG. 2 illustrates the rest member 210 in the second state, a state in which the rest member 210 can be used by the driver, or any other person, to rest or sleep on. In the second state, the rear edge 215 is in a raised position, e.g. at the top position of the vertical guide 230. The support surface 211 is tilted upwards in a substantially level orientation perpendicular to the rear wall 140.

The vertical stroke of the rest member 210 between the first and second state, e.g. between the top and bottom position of the vertical guide 230, may be between 30 and 60 centimeters, preferably between 40 and 50 centimeters, or about equal to the width W1 of the rest member 210. The pivot angle about the pivot axis 202, that can be made by the carriage 220 relative to the vertical guide when the rest member 210 is operated between the first and second state may be about 90 degrees, e.g. 80-100 degrees.

As illustrated in FIGs. 1 and 2, in the second state, the rest member 210 may extend in a lateral direction Y of the truck, between and up to opposing lateral side walls 143, 144 of the cabin. The lateral side walls 143, 144 of the cabin may be spaced apart by about 2-2,5 meters, which can provide the rest member 210 with sufficient length for a person to lie down and fully extend on top of the rest member 210. The rest member 210 does not necessarily extend all the way up to the lateral side walls 143, 144, but can be shorter.

In the vertical direction Z of the truck 100, the rest member 210 preferably extends in the first state from the floor of the cabin up to the lower edge of the rear view window 150. The floor of the cabin may be locally raised, e.g. to accommodate other parts of the truck. For example, the rest member 210 may lie against an engine tunnel 160 or center console of the cabin that extends between the driver seat and passenger seat, as shown in FIG. 1.

In the second state, illustrated in FIG. 2, the rest member 210 may extend from the rear wall 140 of the cabin in the forward driving direction X of the truck, and may at least partially cross the driver seat 105. The total distance WO between the rear wall 140 and the front edge 216 of the rest member in the second state can e.g. be between 40 and 80 centimeters, preferably 50-65 centimeters. To prevent that the driver seat 105 needs to be substantially adjusted, e.g. shifted and/or tilted forward, when the rest member 210 is in the second state, the rest member 210 can optionally have a recessed section 218 directly behind the driver seat. In the recessed section 218 the front edge 216 of the rest member is recessed towards the rear edge 215, or in other words, the width W2 of the rest member 210 between the front and rear edge 215, 216 is locally reduced in the area directly behind the driver seat 105.

Such a recessed section 218 beneficially also provides a clearance behind the driver seat when the rest member 210 is stowed in the first state, as can be seen in FIG. 1. The recessed section 218 allows the driver seat 105 to be reclined further backwards, e.g. until the backrest of the driver seat abuts the rear wall 140 of the cabin.

Instead of such a recessed section 218, or in addition, the rest member 210 can be provided with a chamfered section directly behind the driver seat. In the chamfered section, the rest member 210 preferably tapers from a largest thickness at the rear edge 215 towards a smallest thickness at the front edge 216, to provide a clearance for the backrest of the driver seat.

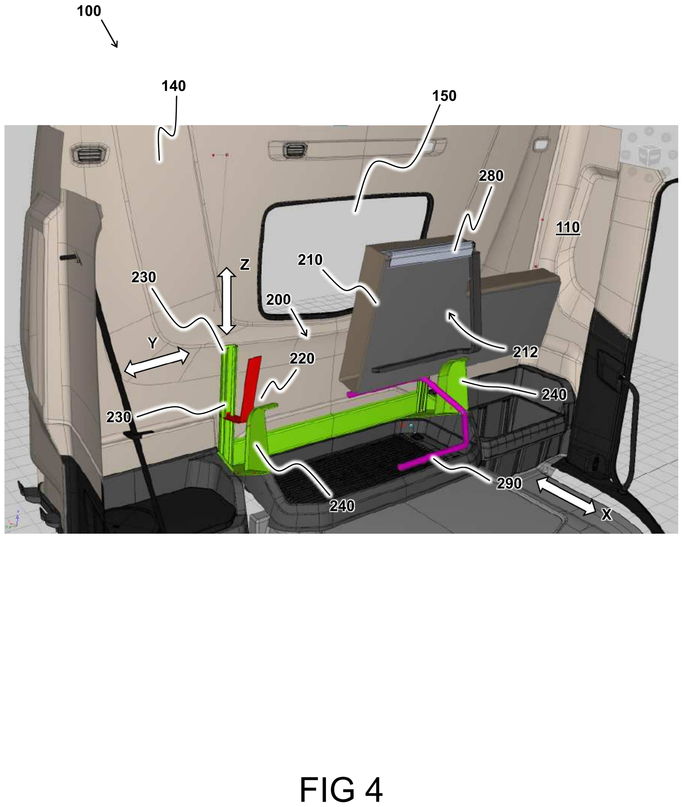

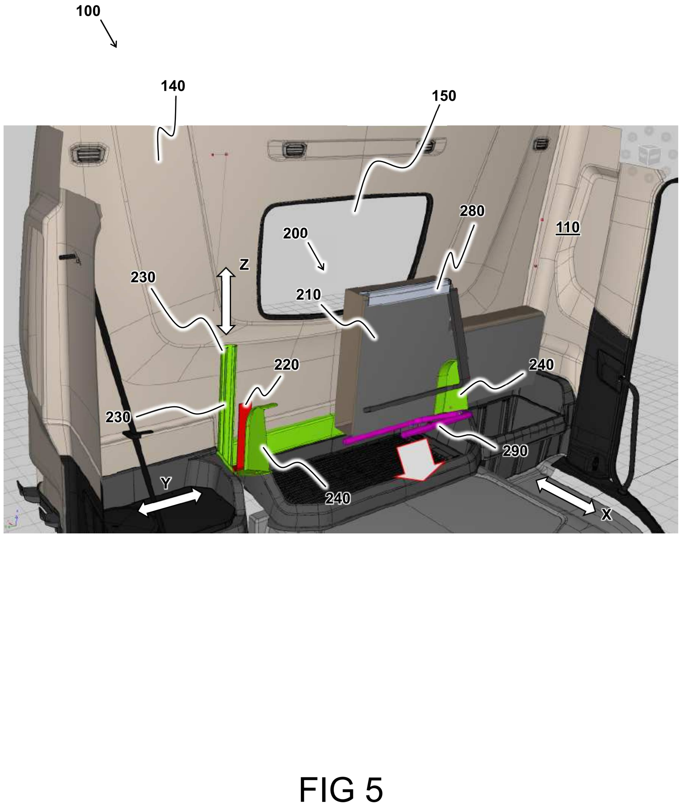

FIGs. 3-5 provide a partial section view of an embodiment of the resting arrangement 200. The rest member 210 is sectioned to provide a better view on the structure underneath. In FIG. 3, the rest member 210 is in the second state, in which a person can lie or sit on the rest member 210. In FIG. 4 the rest member 210 is illustrated in a position about halfway between the first and second state. In FIG. 5 the rest member 210 is depicted in the stowed, first state.

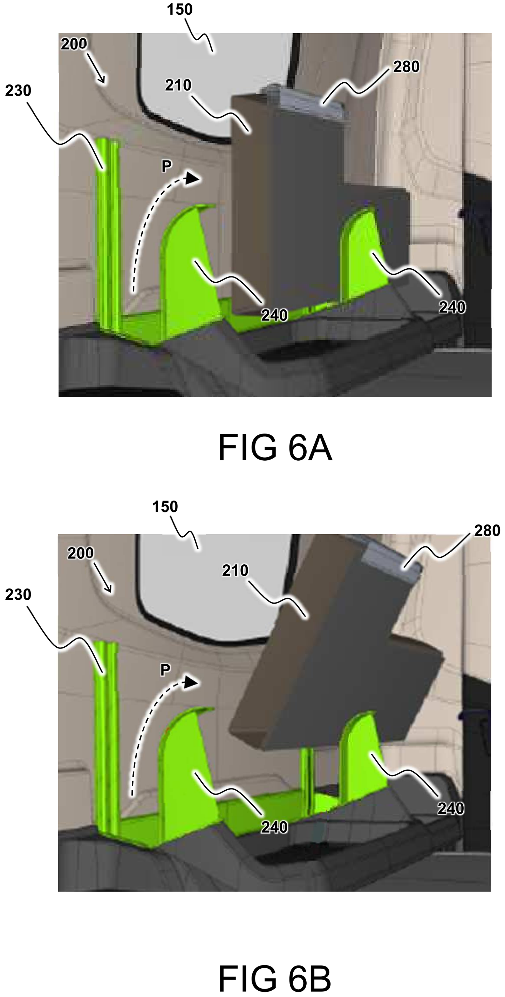

As can be seen in FIGs. 3-5, the resting arrangement 200 comprises a sliding guide 240 arranged for slidably guiding a bottom surface 212 of the rest member over a guided path P between the first state and the second state. The path P e.g. follows a contour of the sliding guide 240. In order to efficiently guide the movement of the rest member 210 between the first and second state, the guided path P preferably follows a curved trajectory that extends upwards, e.g. in the vertical direction Z, and is curved forward in the driving direction X of the truck, see also FIGs. 6A-B and 7A-B.

The bottom surface 212 of the rest member 210 is provided on the opposite side of the support surface 211. The bottom surface 212 can e.g. be formed by the carriage 220, as illustrated in FIG. 3. The sliding guide 240 thus contacts the bottom surface 212 and/or the carriage 220 over the guided path P. When the rest member 210 is in the second state, the sliding guide 240 vertically supports the rest member 210. For stability, the sliding guide 240 can for example comprise one or more upstanding support struts that extend from a floor of the cabin, and/or from the lateral side walls 143, 144 of the cabin.

The carriage 220 may be configured such that a portion of the carriage extends between the rest member 210 and the sliding guide 240, e.g. to provide an intermediate running surface. In this way, contact forces and sliding friction occur between the carriage 220 and the sliding guide 240. The combination of materials of the sliding guide 240 and the carriage 220 can be chosen such that the friction coefficient between these components is relatively low, and such that wear of these components is limited.

In the embodiment illustrated in FIGs. 3-5, the sliding guide 240 is slidably connected to the bottom surface 212 of the rest member 210. In other words, the slidable connection remains intact as the rest member 210 is moved over the guided path P. The slidable connection preferably allows the rest member 210 to move along the guided path P only, and constrains movements of the rest member 210 with respect to the sliding guide 240 in other directions.

FIGs. 3-5 further show that the front edge 216 of the rest member 210 is provided with a handle 280, or handgrip. The handle 280 can be used by an operator to manually operate, e.g. push and pull, the rest member 210 from the first state to the second state, and vice versa. Additionally, or alternatively, the rest arrangement 200 may comprise a foot controlled lever 290 that is operable by a foot of the user to move, e.g. lift or lower, the rest member 210 from the first state to the second state, and vice versa. Such a foot controlled lever 290 can e.g. be pivotably mounted between the rest member 210 and the cabin floor, and a front part of the lever 290 can e.g. be pressed down by a foot so that a rear part of the lever 290 moves upward and raises rest member 210 out from the stowed position (see FIG. 4 and 5). A rest arrangement 200 with a foot controllable switch may facilitate operation in case the rest member 210 is relatively heavy.

To further facilitate operation of the resting arrangement 200, the resting arrangement 200 may optionally comprise weight compensation means, such as counterweights or springs, for at least partially compensating the weight of the rest member 210. Alternatively, or additionally, the resting arrangement 200 may optionally be provided with biasing means, such as an air spring, for biasing the rest member towards the first and/or second state.

To prevent that the rest member 210 is unintentionally displaced from the first or second state, e.g. due the truck driving over a rough road surface, or due to a person shifting around on the rest member 210 while resting, the resting arrangement 200 preferably comprises a lock mechanism arranged for locking the rest member 200 in the first and/or second state. Such a lock mechanism for example includes a retractable pin or latch, or a hook element which in a locked position extends between the carriage 220 and the vertical guide 230, or between other parts that are movable with respect to each other.

FIGs. 7A and B provide a side view of an embodiment of the resting arrangement 200 in the first state (FIG. 7A) and in the second state (FIG. 7B). The sliding guide 240 slidably guides the bottom surface 212 of the rest member 210 over a guided path P between the first state and the second state. As illustrated, the path P follows the contour of the sliding guide 240. The contour preferably has an upward section 241 and a forward section 242, defining a curved trajectory, or path P, that extends upwards in the vertical direction Z and curves forward in the driving direction X. During the movement, the rest member 210 pivots about the pivot axis 202, and the carriage slides vertically in the Z direction between a lowest level H1 above the cabin floor 111 in the first state and a highest level H2 above the cabin floor 111 in the second state.
In the first state, the upward section 241 of the sliding guide 240 constrains a forward rotation of the rest member 210 about the pivot axis 202. In the second state, the rest member 210 is vertically supported by the forward section 242 of the sliding guide 240, to support the weight of the rest member 210 including a resting person. Optionally, an auxiliary support member 270 may be provided near the front edge 215 of the rest member. Preferably, such an optional auxiliary support member 270 is pivotably attached to the carriage 220, e.g. about auxiliary pivot axis 271. Accordingly, the support member 270 can be folded against the bottom surface 212 of the rest member 210 in the first state, and folded out in the second state such that the support member 270 extends substantially perpendicular to the bottom surface 212. The support member 270 may be provided with a support foot 272 at its distal end away from the auxiliary pivot axis 271. The support foot 272 may be arranged for abutting the cabin floor 111 in the second state.

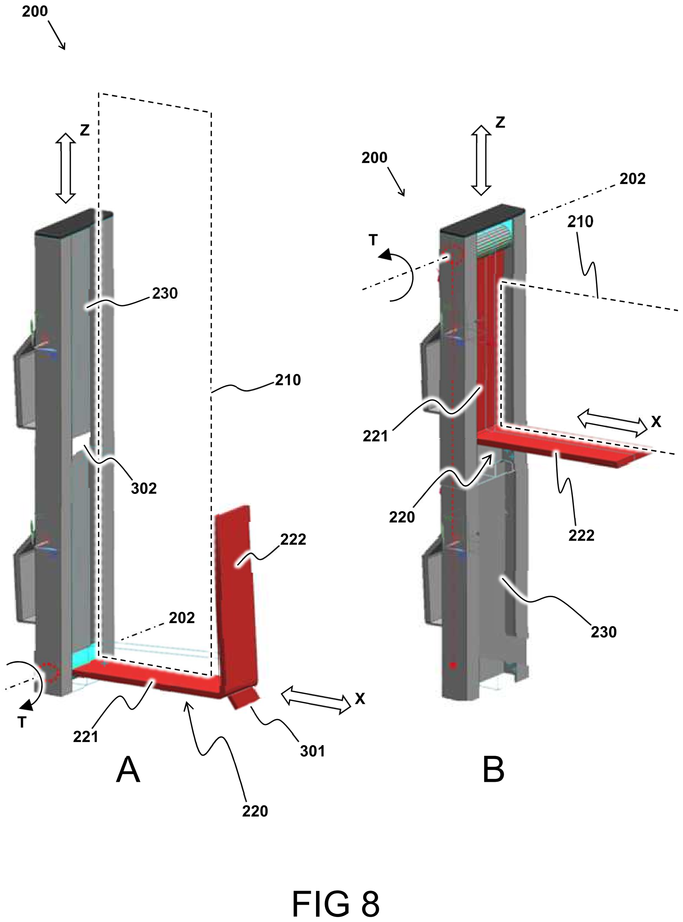

FIGs. 8A-B illustrate a preferred embodiment of the resting arrangement 200, wherein the carriage 220 comprises an L-shaped bracket. The rest member 210 is represented by a dashed rectangle, for clarity. The L-shaped bracket includes a leg 221 that extends from the vertical guide 230 towards a foot 222. The foot 222 extends out from the leg 221 and supports the bottom surface 212 of the rest member 210. In the first state, illustrated in FIG. 8A, the leg 221 extends substantially perpendicular to the rear wall of the cabin, e.g. in the driving direction X, and the foot 222 extends vertically upward, e.g. in the vertical direction Z.

In the second state, illustrated in FIG. 8B, the leg 221 abuts the vertical guide 230 and the foot 222 extends substantially perpendicular to the rear wall, e.g. in the driving direction X.

FIGs. 8A-B further illustrate that the L-shaped bracket can be provided with a particular type of lock mechanism 300. The illustrated lock mechanism 300 comprises a lock hook 301 that extends outwards from the joint between the leg 221 and the foot 222. More specifically, the lock hook 301 extends from the joint at a bisecting angle between the leg 221 and the foot 221, e.g. an angle between 10 and 80 degrees with respect to the leg and the foot, preferably between 40-50 degrees. The lock hook 301 is arranged for hooking onto a cutout 302 in the vertical guide 230 when the rest member 210 is in the second state. When hooked in the cutout 302, the lock hook 301 constrains the vertical translation of the carriage 220 relative to the vertical guide 230 in the vertical direction Z, and also constrains a tilting of the rest member 210 in a tilting direction T about the pivot axis 202.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a cabin including a driver seat for seating a driver of the truck, wherein a rear wall of the cabin comprises a rear view window through which the driver is able to look towards a rear of the truck, wherein a resting arrangement is provided behind the driver seat for resting the driver inside the cabin, the resting arrangement comprising a pivotable rest member that provides a support surface for supporting the driver, wherein the rest member is pivotable in that a rear edge of the rest member is pivotably suspended about a pivot axis by a carriage, and the carriage is vertically translatable with respect to a vertical guide attached to the rear wall of the cabin;
wherein the pivotable rest member is operable between a first state and a second state;
in the first state the rear edge is in a lowered position and the support surface is tilted inwards against the rear wall of the cabin, and a front edge of the rest member opposite the rear edge is below the rear view window;
in the second state, the rear edge is in a raised position and the support surface is tilted upwards in a substantially level orientation perpendicular to the rear wall;
wherein the resting arrangement further comprises a sliding guide arranged for slidably guiding a bottom surface of the rest member opposite the support surface over a guided path between the first state and the second state; and
wherein the sliding guide is arranged for vertically supporting the rest member in the second state.

2. The truck according to claim 1, wherein the sliding guide is slidably connected to the bottom surface of the rest member, wherein said slidable connection remains intact as the rest member is moved over the guided path.

3. The truck according to any of the preceding claims, wherein the sliding guide comprises one or more upstanding support struts that extend from a floor of the cabin.

4. The truck according to any of the preceding claims, wherein the guided path follows a curved trajectory that extends upwards and is curved forward in a driving direction of the truck.

5. The truck according to any of the preceding claims, wherein, in the second state, the rest member extends between and up to opposing lateral side walls of the cabin.

6. The truck according to any of the preceding claims, wherein, in the first state, the rest member extends in a vertical direction from a floor of the cabin up to a lower edge of the rear view window.

7. The truck according to any of the preceding claims, wherein, in the second state, the rest member extends from the rear wall of the cabin and at least partially across the driver seat in a driving direction of the truck.

8. The truck according to any of the preceding claims, wherein the rest member has a recessed section directly behind the driver seat, in which recessed section the front edge of the rest member is recessed towards the rear edge.

9. The truck according to any of the preceding claims, wherein the bottom surface of the rest member has a chamfered section directly behind the driver seat, in which chamfered section the rest member tapers from a largest thickness at the rear edge towards a smallest thickness at the front edge.

10. The truck according to any of the preceding claims, wherein the front edge of the rest member comprises a handle for manually operating the rest member between the first and second state.

11. The truck according to any of the preceding claims, wherein the resting arrangement comprises weight compensation means for at least partially compensating a weight of the rest member.

12. The truck according to any of the preceding claims, wherein the resting arrangement comprises a biasing means for biasing the rest member towards the first and/or second state.

13. The truck according to any of the preceding claims, wherein the resting arrangement comprises a lock mechanism arranged for locking the rest member in the first and/or second state.

14. The truck according to any of the preceding claims, wherein the carriage comprises an L-shaped bracket, wherein the L-shaped bracket includes a leg that extends from the vertical guide towards a foot that extends out from the leg and supports the bottom surface of the rest member, wherein, in the first state, the leg extends substantially perpendicular to the rear wall of the cabin and the foot extends vertically upward, and wherein, in the second state, the leg abuts the vertical guide and the foot extends substantially perpendicular to the rear wall.

15. The truck according to claim 14, wherein the L-shaped bracket comprises a lock hook that is arranged for hooking onto a cutout in the vertical guide when the rest member is in the second state, for thereby constraining a vertical translation of the carriage relative to the vertical guide as well as constraining a tilting of the rest member about the pivot axis.
